# EUROPÄISCHE PATENTSCHRIFT

(11) **EP 2 162 322 B1**
(45) Veröffentlichungstag und Bekanntmachung des Hinweises auf die Patenterteilung: **08.12.2010**
(21) Anmeldenummer: 08735951.9
(22) Anmeldetag: 08.04.2008
(51) Int. Cl.: B60S 1/38

(54) **WISCHBLATT**
WIPER BLADE
BALAI D'ESSUIE-GLACE

(30) Priorität: 22.05.2007 DE 102007023398
(43) Veröffentlichungstag der Anmeldung: 17.03.2010
(73) Patentinhaber: Robert Bosch GmbH, 70442 Stuttgart (DE)
(72) Erfinder: WILMS, Christian, B-3582 Koersel-Beringen (BE)
(86) Internationale Anmeldenummer: PCT/EP2008/054224
(87) Internationale Veröffentlichungsnummer: WO 2008/141864

(56) Entgegenhaltungen:
- WO-A-02/04265
- WO-A-02/06099
- DE-A1- 10 245 693
- DE-A1- 10 333 083

## Beschreibung

### Stand der Technik

Die Erfindung geht von einem Wischblatt nach dem Oberbegriff des Anspruchs 1 aus.

Aus der DE 102 45 693 A1 ist ein gattungsgemäßes Wischblatt bekannt. Ferner ist aus der DE 103 33 083 A1 ein Wischblatt bekannt, dessen Tragelement aus zwei parallel verlaufenden Federschienen aus Federstahl besteht. An den Enden der Federschienen sind Endbrücken aus Metall aufgeschweißt, die als Abstandshalter für die Federschienen dienen. Außerdem ist aus der Schrift ein Wischblatt bekannt, bei dem die Enden der Federschienen direkt an einer Endkappe aus Kunststoff befestigt sind, die als Abstandshalter dient. Die Oberfläche der Federschienen ist zumindest im Bereich der Befestigungsfläche beschichtet, z.B. lackiert oder pulverbeschichtet. Die Federschienen können so durch Reibschweißen mit der Endkappe verbunden sein.

Es ist ferner bekannt, dass mehrere Tragelemente nach dem Schweißen parallel zueinander durch eine Traverse miteinander verbunden sind, und zwar indem jeweils eine Endbrücke mit einer der Traverse zugewandten Stirnseite an der Traverse befestigt ist. Vorzugsweise besitzt die Endbrücke an der Verbindungsstelle einen angeformten Vorsprung. Nach dem Beschichten werden die einzelnen Tragelemente im Bereich der Vorsprünge quer zur Längsrichtung von der Traverse getrennt, wobei in der Trennebene an den Stirnseiten unbeschichtete Stirnflächen entstehen. Während der sehr strengen Korrosionstests tritt an diesen blanken Stirnflächen Rotrost auf. Für Wischblätter, die entweder am Innen- oder Außenkreis eine abnehmbare Refillkappe besitzen, führen diese korrodierten Stellen zu Problemen, insbesondere mit unzufriedenen Kunden.

### Offenbarung der Erfindung

Nach der Erfindung sind die Endbrücken mit ihren Füßen mit den Federschienen verbunden, z.B. durch Schweißen, Kleben, Nieten, Krimpen oder dgl. Mindestens eine der Endbrücken besitzt stirnseitig eine nach außen weisende, unbeschichtete Stirnfläche. Über diese ist sie während des Fertigungsprozesses während eines Beschichtungsvorgangs mit einer Traverse verbunden, an der weitere Tragelemente in gleicher Weise befestigt sind. Die unbeschichtete Stirnfläche der Endbrücke ist im montierten Zustand des Tragelements am Wischblatt durch ein angrenzendes Bauteil dichtend abgedeckt, wobei das Tragelement im Übrigen beschichtet ist. Durch die dichte Abdeckung der blanken Stirnfläche wird eine Korrosion während des Betriebs vermieden, sodass keine Beanstandungen durch den Kunden zu befürchten sind. Dabei kann das angrenzende Bauteil von dem Wischgummi gebildet werden, der im Bereich der Stirnfläche der Endbrücke einen über seine Kopfleiste vorstehenden Vorsprung aufweist, der im montierten Zustand dichtend an der blanken Stirnfläche anliegt. Alternativ kann das angrenzende Bauteil eine Endkappe sein, die mit der Innenseite ihrer Stirnwand dichtend an der blanken Stirnfläche anliegt. Zur besseren Abdichtung ist es vorteilhaft, dass die Endkappe an der Innenseite ihrer Stirnwand im Bereich der blanken Stirnfläche eine Einlage aus einem geeigneten Werkstoff besitzt, z.B. aus einem thermoplastischen Elastomer. Die blanke Stirnfläche der Endbrücke kann auf ein Minimum reduziert werden, wenn die Endbrücke an der Verbindungsstelle zur Traverse einen Vorsprung mit einer reduzierten Querschnittfläche aufweist.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung zweier miteinander verbundener Tragelemente,
- Fig. 2: eine perspektivische Darstellung eines Endes eines er- findungsgemäßen Wischblatts und
- Fig. 3: eine Variante zu Fig. 2.

### Ausführungsformen der Erfindung

Ein Wischblatt 10 umfasst einen Wischgummi 34 und ein Tragelement 12 mit zwei Federschienen 14 und 16 aus Federstahl, an deren Enden eine Endbrücke 20 aus Metall jeweils an ihren Füßen 26 befestigt, z. B. angeschweißt, angeklebt, angenietet oder dgl., ist. Während des Fertigungsverfahrens sind mehrere Tragelemente 12 mindestens an einem Ende über ihre Endbrücken 20 stirnseitig mit einer Traverse 18 verbunden. Nachdem die zusammenhängenden Tragelemente 12 beschichtet sind, werden sie von der Traverse 18 gelöst, wobei an der Trennstelle unbeschichtete, blanke Stirnflächen 32 entstehen. Um die blanken Stirnflächen 32 klein zu halten, ist es zweckmäßig, dass die entsprechenden Endbrücken 20 an der der Traverse 18 zugewandten Seite einen Vorsprung 30 mit einer reduzierten Querschnittfläche aufweisen.

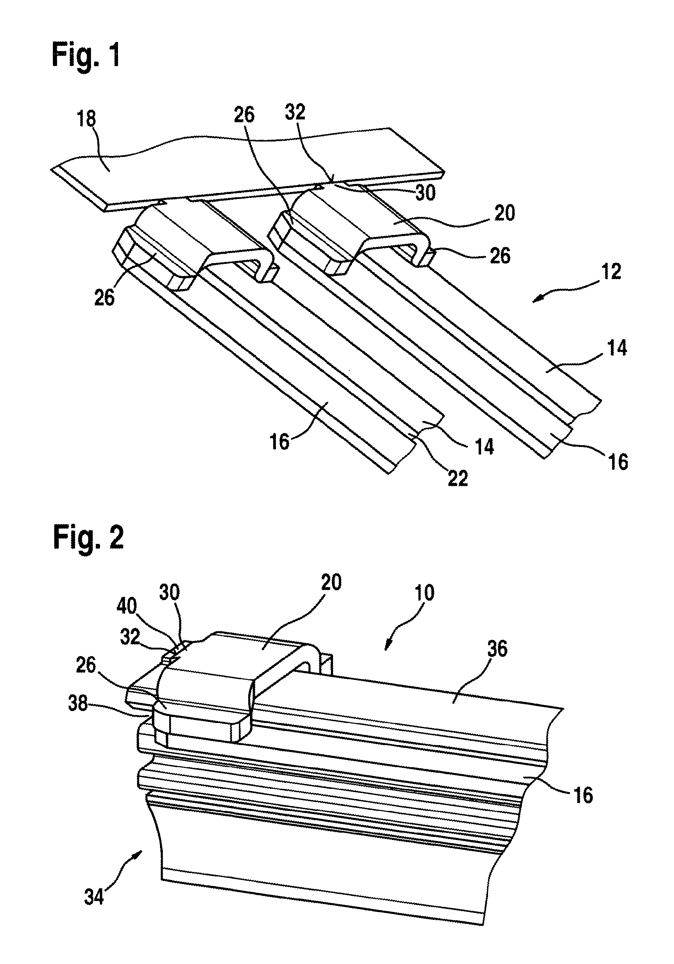

Die Endbrücken 20 dienen gleichzeitig als Abstandshalter für die Federschienen 14, 16, sodass zwischen diesen ein Spalt 22 für den Wischgummi 34 gebildet wird. Der Wischgummi besitzt eine Kopfleiste 36 mit zwei seitlichen Längsnuten 38, in die die Federschienen 14, 16 des Tragelements 12 eingeschoben werden. Bei der Ausführung nach Fig. 2 besitzt die Kopfleiste 36 im Bereich der blanken Stirnfläche 32 der Endbrücke 20 einen Vorsprung 40, der im montierten Zustand des Wischgummis 34 dichtend an der unbeschichteten Stirnfläche 32 der Endbrücke 20 anliegt und somit die Stirnfläche 32 vor Korrosion schützt.

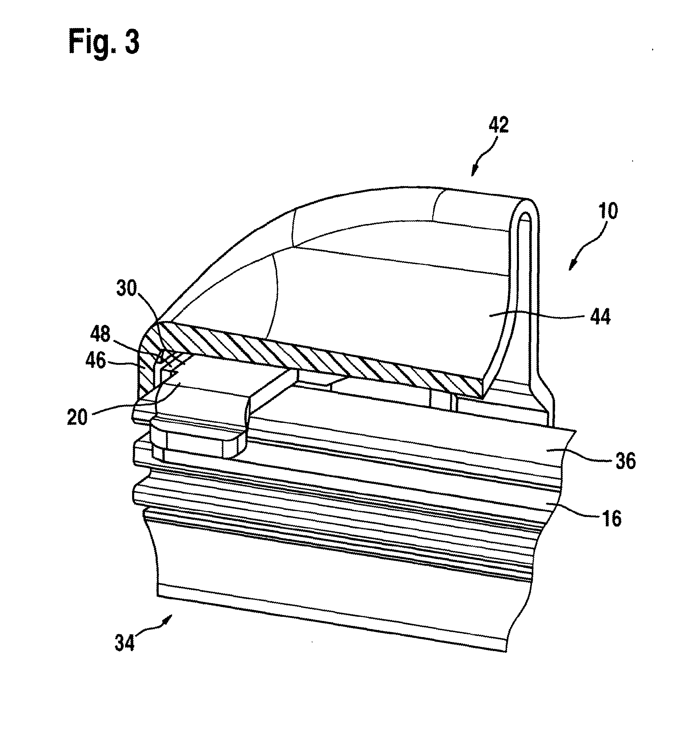

Bei der Ausführung nach Fig. 3 besitzt das Wischblatt 10 eine Endkappe 42 mit einem Windleitprofil 44. Die Endkappe 42 liegt mit der Innenseite ihrer Stirnwand 46 an der unbeschichteten Stirnfläche 32 dichtend an und erfüllt somit den gleichen Zweck wie der Vorsprung 40 an der Kopfleiste 36 des Wischgummis 34. Zur Verbesserung der Abdichtung ist an der Endkappe 42 im Bereich der unbeschichteten Stirnfläche 32 eine Einlage 48 aus einem geeigneten Werkstoff vorgesehen, vorzugsweise aus einem thermoplastischen Elastomer.

## Patentansprüche

1. Wischblatt (10) mit einem Tragelement (12), bestehend aus zwei parallel zueinander verlaufenden Federschienen (14, 16) aus Federstahl, die an ihren Enden durch Endbrücken (20) miteinander verbunden sind, wobei die Endbrücken (20) einen Spalt (22) zwischen den Federschienen (14, 16) für einen Wischgummi (34) überbrücken, **dadurch gekennzeichnet, dass** mindestens eine der Endbrücken (20) stirnseitig eine unbeschichtete Stirnfläche (32) besitzt, die im montierten Zustand des Tragelements (12) durch ein angrenzendes Bauteil (34, 42) dichtend abgedeckt ist, während das Tragelement (12) im Übrigen beschichtet ist.

2. Wischblatt (10) nach Anspruch 1, **dadurch gekennzeichnet, dass** der Wischgummi (34) im Bereich der unbeschichteten Stirnfläche (32) der Endbrücke (20) einen über seine Kopfleiste (36) vorstehenden Vorsprung (40) aufweist, der im montierten Zustand dichtend an der Stirnfläche (32) anliegt.

3. Wischblatt (10) nach Anspruch 1 mit mindestens einer Endkappe (42), **dadurch gekennzeichnet, dass** die Endkappe (42) mit der Innenseite ihrer Stirnwand (46) dichtend an der unbeschichteten Stirnfläche (32) der Endbrücke (20) anliegt.

4. Wischblatt (10) nach Anspruch 3, **dadurch gekennzeichnet, dass** die Endkappe (42) an der Innenseite ihrer Stirnwand (46) im Bereich der unbeschichteten Stirnfläche (32) eine Einlage (48) besitzt.

5. Wischblatt (10) nach Anspruch 4, **dadurch gekennzeichnet, dass** die Einlage (48) aus einem thermoplastischen Elastomer besteht.

6. Wischblatt (10) nach einem der vorhergehenden Ansprüche, **dadurch gekennzeichnet, dass** die unbeschichtete Stirnfläche (32) an einem Vorsprung (30) vorgesehen ist, der an der Endbrücke (20) angeformt ist.

## Claims

1. Wiper blade (10) with a supporting element (12) consisting of two spring rails (14, 16) which run parallel to each other, are made from spring steel and are connected to each other at the ends thereof by means of end bridges (20), wherein the end bridges (20) span a gap (22) between the spring rails (14, 16) for a wiper blade rubber (34), **characterized in that** at least one of the end bridges (20) has, on the end side, an uncoated end surface (32) which, in the fitted state of the supporting element (12), is covered in a sealing manner by an adjacent component (34, 42) while the supporting element (12) is otherwise coated.

2. Wiper blade (10) according to Claim 1, **characterized in that** the wiper blade rubber (34) has, in the region of the uncoated end surface (32) of the end bridge (20), a projection (40) which protrudes over the head strip (36) of said wiper blade rubber and, in the fitted state, bears against the end surface (32) in a sealing manner.

3. Wiper blade (10) according to Claim 1, with at least one end cap (42), **characterized in that** the end cap (42) bears with the inside of the end wall (46) thereof against the uncoated end surface (32) of the end bridge (20) in a sealing manner.

4. Wiper blade (10) according to Claim 3, **characterized in that** the end cap (42) has an insert (48) on the inside of the end wall (46) thereof in the region of the uncoated end surface (32).

5. Wiper blade (10) according to Claim 4, **characterized in that** the insert (48) consists of a thermoplastic elastomer.

6. Wiper blade (10) according to one of the preceding claims, **characterized in that** the uncoated end surface (32) is provided on a projection (30) which is integrally formed on the end bridge (20).

## Revendications

1. Balai d'essuie-glace (10) comprenant un élément de support (12), constitué de deux rails élastiques (14, 16) en acier à ressort, s'étendant parallèlement l'un à l'autre, qui sont connectés l'un à l'autre au niveau de leurs extrémités par des ponts d'extrémité (20), les ponts d'extrémité (20) surmontant une fente (22) entre les rails élastiques (14, 16) pour un caoutchouc d'essuie-glace (34), **caractérisé en ce qu'**au moins l'un des ponts d'extrémité (20) possède, du côté frontal, une surface frontale non revêtue (32) qui, dans l'état monté de l'élément de support (12), est recouverte de manière hermétique par un composant adjacent (34, 42), tandis que le reste de l'élément de support (12) est revêtu.

2. Balai d'essuie-glace (10) selon la revendication 1, **caractérisé en ce que** le caoutchouc d'essuie-glace (34), dans la région de la surface frontale non revêtue (32) du pont d'extrémité (20), présentent une saillie (40) faisant saillie au-delà de sa baguette de tête (36), laquelle saillie, dans l'état monté, s'applique hermétiquement contre la surface frontale (32).

3. Balai d'essuie-glace (10) selon la revendication 1, comprenant au moins un capuchon d'extrémité (42), **caractérisé en ce que** le capuchon d'extrémité (42) s'applique avec le côté intérieur de sa paroi frontale (46) de manière hermétique contre la surface frontale (32) non revêtue du pont d'extrémité (20).

4. Balai d'essuie-glace (10) selon la revendication 3, **caractérisé en ce que** le capuchon d'extrémité (42) possède, sur le côté intérieur de sa paroi frontale (46), dans la région de la surface frontale non revêtue (32) un insert (48).

5. Balai d'essuie-glace (10) selon la revendication 4, **caractérisé en ce que** l'insert (48) se compose d'un élastomère thermoplastique.

6. Balai d'essuie-glace (10) selon l'une quelconque des revendications précédentes, **caractérisé en ce que** la surface frontale non revêtue (32) est prévue au niveau d'une saillie (30) qui est façonnée sur le pont d'extrémité (20).
